# EUROPEAN PATENT SPECIFICATION

(11) **EP 2 759 188 B1**
(45) Date of publication and mention of the grant of the patent: **13.07.2016**
(21) Application number: 13182642.2
(22) Date of filing: 02.09.2013
(51) Int. Cl.: A01C 3/00

(54) **Manure separator**
Gülleseparator
Séparateur de fumier

(30) Priority: 04.09.2012 BE 201200576
(43) Date of publication of application: 30.07.2014
(73) Proprietor: Bollaert BVBA, 9080 Beervelde (BE); Degramec BVBA, 9080 Lochristi (BE)
(72) Inventor: De Graeve, Miguel, 9080 Lochristi (BE); Bollaert, Marc, 9080 Beervelde (BE)
(74) Representative: Vanhalst, Koen

(56) References cited:
- DE-A1- 2 750 499
- DE-A1- 2 943 962
- DE-A1- 3 928 518
- US-A- 4 309 284
- US-A- 4 828 689

## Description

### FIELD OF THE INVENTION

The invention relates to a manure separator suitable for separating manure. The invention also relates to a method for separating manure.

### TECHNOLOGICAL BACKGROUND OF THE INVENTION

Manure consists largely of insoluble particles. These can be separated from the soluble particles in the slurry by mechanical separation. Through such mechanical separation, the manure is typically divided into two or more fractions, for the purpose of further processing and/or marketing. Mechanical separation may also be used as post-treatment, for example, after biological or physico-chemical treatment, or as a pre-treatment.

DE 3 928 518 discloses a manure separater comprising a lilter.

There are several systems for mechanical manure separation. Not all of them lend themselves to small business level, and are often only practicable for large capacities. Some existing techniques are briefly discussed below.
- In case of sedimentation separation of insoluble particles takes place under the influence of the force of gravity. This separation acts, inter alia, for the storage of thin sows manure in a manure pit or silo. Such a separation technique is slow and has low separation efficiency.
- A sieve bend is a parabolic screen without moving parts, and thus is a simple and inexpensive construction. A sieve bend has due to the lack of moving parts, no cleaning power, such that the sieve is quickly blocked. Cleaning a clogged sieve results in high labour costs. Moreover, a sieve bend has a poor to moderate separation efficiency for phosphate.
- A sieve drum, or drum filter comprises a perforated drum, which is typically mounted at a rising angle. By varying the length of the drum and the angle of inclination, the desired dry matter content of the solid fraction may be varied. It is a simple and relatively inexpensive construction, which can handle several variations of manure. For streams with high dry matter content, such an arrangement is, however, less interesting. However, a sieve drum is not suitable for liquid manure.
- A screening belt is relatively cheap, but has the disadvantage that adjuvants, such as metal salts and/or polymers, are often required. These excipients hamper the marketing. Moreover, a belt is more difficult to operate than a drum sieve, and less clean.
- A jack press or screw press consists of a jack or screw and a sieving cage. The sieving cage is usually a perforated cylindrical trough having holes with a diameter of 0:15 to 1:00 mm. The screw press has reasonable separation efficiency for phosphate, approximately 40 % for cattle slurry, but less than 25 % for pig slurry. The sieving cage can however become clogged easily. This renders the screw press more susceptible to malfunctions than simpler manure separators. Cleaning the sieve is difficult and takes quite long.
- A belt press exists in different forms, from a simple sieving belt with a roller, to presses with different membranes. Typically, the manure slurry is pressed between two parallel conveyor belts, wherein the lower belt serves as a sieve belt. The belt filter consists for example out of filter cloth. A belt filter press can achieve good separation efficiency for phosphates (up to 50-75 %), if they make use of additives such as flocculants. These excipients however hamper the marketing.
- In case of centrifugation, separation of the insoluble particles takes place under the influence of centrifugal force. A centrifuge has high separation efficiency, but is expensive and has high energy consumption. In addition, centrifugation of the manure slurry can be associated with air intake, such that the manure can undergo excessive foaming.
- A tower filter uses batch filtration with a filter membrane by air pressure. Also, for a batch filter, excipients are needed. The membranes are prone to clogging.
- When a sedimat sedimentation tower is used, the manure is brought into a vertical tower with three levels. Upon opening up the other compartments, the liquid part (poor in Phosphate) migrates to the upper compartment, and the thickest part (Phosphate - rich) migrates to the lower compartment. This system presupposes at least two storage means and a processing tank.

The above techniques are susceptible to a number of technical problems. Especially with manure separation on the basis of filtration, clogging or fouling of the filter can occur. The filter is also prone to damage, wherein the presence of sand in the manure slurry can lead to additional wear and tear Because of the fragility of typical sieves, only a limited pressure can be used. Furthermore, the finest screens often have a minimum sieving size of 0.15 mm. Also the cleaning of such fine filters has been very difficult due to their high brittleness.

Thus, there is a need for a system for manure separation that allows achieving increased separation efficiency, especially for phosphate. There is also a need for a manure separation system that can be easily cleaned. There is also a need for a manure separation system that can be easily adapted to different types of manure. There is also a need for a manure separation system that can be easily adapted to the manure fractions to be separated. There is also a need for a system for manure separation that can separate finer insoluble particles from the soluble particles. There is also a need for a manure separation system which is more solid and / or can handle a higher pressure. There is also a need for a manure separation system which is abrasion resistant. There is also a need for a manure separation system which has a low cost to produce.

### SUMMARY OF THE INVENTION

The invention comprises, in a first aspect, a manure separator with a filter (100), the filter (100) comprising two or a plurality of axially stacked and interconnected rings (110), wherein the rings (110) are characterized in that the thickness of the rings (110) is not equal around the circumference of the rings (110), generating a minimum thickness (111) and a maximum thickness (112), with the thickness difference (113) being defined as the difference between the maximum thickness (112), and the minimum thickness (111), and creating one or more openings (120) between the two or more rings (110).

In a preferred embodiment, at least one of the two or more rings (110) has a maximum thickness (112) of at least 0.60 mm*.*

In a preferred embodiment, the invention provides a manure separator with a filter (100) according to the first aspect of the invention, in which at least one of the two or more rings (110) has a flat side (116) and a non-ftat side (117).

In a preferred embodiment, the invention includes a manure separator with a filter (100) according to the first aspect of the invention, wherein at least one of the two or more rings (110) are characterized in that the difference in thickness (113), defined as the difference between the minimum thickness (111) and the maximum thickness (112), is at least 0.005 mm and not more than 0.50 mm.

In a preferred embodiment, the invention includes a manure separator with a filter (100) according to the first aspect of the invention, wherein at least two of the two or more rings (110) have a different thickness difference (113).

In a preferred embodiment, the invention includes a manure separator with a filter (100) according to the first aspect of the invention, wherein at least one of the two or more rings (110) is characterized by a ring segment (114) with the minimum thickness (111) and a ring segment (115) with the maximum thickness (112).

In a preferred embodiment, the invention includes a manure separator with a filter (100) according to the first aspect of the invention, wherein the sum of the surface area of the ring segment (114) with the minimum thickness (111) and the surface area of the ring segment (115) with the includes maximum thickness (112) comprises more than 90% of the total surface area of the ring (110).

In a preferred embodiment, the invention includes a manure separator with a filter (100) according to the first aspect of the invention, wherein the surface of the ring segment (114) with the minimum thickness (111) comprises at least 20% of the total surface area of the ring (110).

In a preferred embodiment, the invention includes a manure separator with a filter (100) according to the first aspect of the invention, wherein at least one of the two or more rings (110) has an inner diameter (118) of at least 10 cm.

In a preferred embodiment, the invention includes a manure separator with a filter (100) according to the first aspect of the invention, wherein at least one of the two or more rings (110) has an outer diameter (119) of at least 20 cm and not more than 150 cm.

In a preferred embodiment, the invention includes a manure separator with a filter (100) according to the first aspect of the invention, wherein at least two of the two or more rings attached to each other (110) has a different inner diameter (118).

In a preferred embodiment, the invention includes a manure separator with a filter (100) according to the first aspect of the invention, wherein the filter (100) can be modulated.

In a preferred embodiment, the invention includes a manure separator with a filter (100) according to the first aspect of the invention, wherein the one or more openings (120) comprises a water-permeable medium (150).

In a preferred embodiment, the invention includes a manure separator with a filter (100) according to the first aspect of the invention, wherein at least one of the two or more rings (110) comprises a groove (155), wherein the groove comprises a water- permeable medium (150).

In a preferred embodiment, the water -permeable medium (150) comprises a cord.

In preferred embodiment, the cord material being selected from the list comprising: flax, hemp, cotton, manila, sisal, or coconut rope.

In a preferred embodiment, the cord has a thickness of at least 0.02mm.

In a preferred embodiment, the two or more rings (110) are coupled together by means of a coupling means (160), wherein the coupling means (160) is selected from the list comprising: screws, bolts (164) and / or springs (162).

In a preferred embodiment, the invention includes a manure separator with a filter (100) according to the first aspect of the invention, wherein the two or more rings (110) are coupled to each other via springs (162).

In a preferred embodiment, the manure separator (200) comprises a casing (250) surrounding the compressing chamber (202) or around the filter (100).

In a preferred embodiment, the invention provides a manure separator (200) comprising a hydraulic cylinder (210).

In a preferred embodiment, the invention provides a manure separator (200) comprising a jack (215).

In a preferred embodiment, the invention provides a manure separator (200) comprising a funnel (220) at the end of the filter (100).

In a preferred embodiment, the invention provides a manure separator (200) wherein the funnel (220) is a conical funnel.

In a preferred embodiment, the invention provides a manure separator (200) comprising a sealing element at the end of the filter (100) or on the end of the funnel (220).

In a preferred embodiment, the sealing element is a conical sealing element.

In a preferred embodiment, the sealing element is adjustably coupled to the filter (100) or the funnel (220).

In a preferred embodiment, the invention provides a manure separator (200) wherein the closing element applies an adjustable pressure on the manure.

In a preferred embodiment, the invention provides a manure separator (200) wherein two or more manure separators (200) are coupled one after the other.

In a preferred embodiment, the first manure separator (200) does not include a water-permeable cord (150), and the subsequent manure separator (200) does include a water-permeable cord (150).

The invention also comprises a method for separating manure comprising the step:
- Separating the manure fractions with a manure separator (200) according to the first aspect of the invention.

In a preferred embodiment, the invention comprises a method with a flow rate of at least 1.0 m³/h.

In a preferred embodiment, the invention comprises a method wherein the manure comprises cattle or pig manure.

### BRIEF DESCRIPTION OF THE FIGURES

**FIG. 1** illustrates an embodiment of a manure separator (200) according to the second aspect of the invention, comprising a filter (100) according to the first aspect of the invention.
**FIG. 2** illustrates an embodiment of a ring (110).
**FIG. 3** illustrates a front view (a) and a side view (b) of an embodiment of a ring (110).

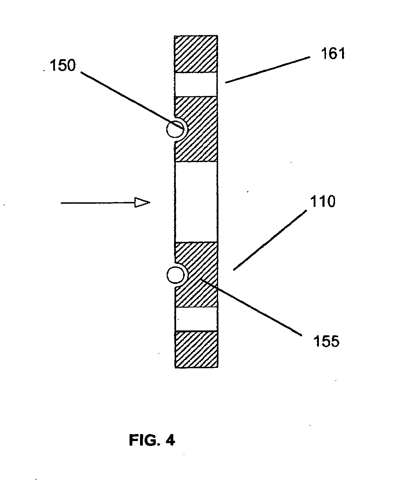

**FIG. 4** illustrates a side cross-section of an embodiment of a ring (110) having a cord (150).
**FIG. 5** illustrates a side view of several embodiments of rings (110).
**FIG. 6** illustrates a side view of a coupling means (160).
**FIG. 7** illustrates an embodiment of a ring (110) with cavities (501), which is built up out of several components (503, 504, 505) wherein, for example 4 tappets (502) can be installed which are under spring pressure to the outside.
**FIG. 8** illustrates an embodiment of a manure separator (200), wherein the rings (110) can fit. As a base, there is a welded frame (507), provided with a compression chamber (511) and the press-cylinder (506). Raw manure (508) is supplied into the compression chamber (511). The rings can be fitted between the fixed containment plate (509) and the movable containment plate (512). A hydraulic counterpoint (510) can provide back pressure.
**FIG. 9** illustrates an embodiment of a manure separator (200) mounted without the welded frame together with the following arrangements: (a) without rings, (b) 1-ring (513), and finally (c) with all of the rings installed.
**FIG. 10** illustrates a front view of the embodiment of a manure separator (200) according to FIG. 9 with all of the rings (110) mounted. The tappets (502) push the rings apart, for example over a distance of 8 mm (514). In this way, the manure separator can be cleaned.
**FIG. 11** illustrates a front view of the embodiment of a manure separator (200) according to FIG. 9, wherein the movable containment plate (512) has moved such that all the rings are connected. In this way, the press is operable to separate manure.
**FIG. 12** illustrates an overview of an embodiment of the manure separator according to the invention, wherein the filter (cf. Fig 9 - 11) is mounted in its housing or frame (507) as shown in FIG. 8.

### DETAILED DESCRIPTION OF THE INVENTION

As further used herein, the singular forms "a", "the ", "it" include both the singular and the plural, unless the context clearly dictates otherwise.

The terms "comprise", "comprises" as used further, are synonymous with "include", "including" or "containing", "contain" are inclusive or open and do not exclude additional not mentioned members, elements or method steps. The terms "comprise", "comprises" include the term "consist of".

The list of numeric values using statistical ranges includes all values and fractions in these ranges, as well as the endpoints quoted.

The term "about," as used when referring to a measurable value such as a parameter, an amount, a period of time, and the like, is intended to embrace variations of +/- 10% or less, preferably +/-5% or less, more preferably +/-1 % or less, and still more preferably +/-0.1 % or less, of and from the specified value, in as far as the variations function to operate in the invention disclosed. It should be understood that the value to which the term "about" refers, is also disclosed as such.

Unless otherwise defined, all terms disclosed in the invention, including technical and scientific terms, have the meaning as is normally understood by one skilled in the art. As a further guideline, definitions are included for further explanation of the terms used in the description of the invention.

The invention comprises, a manure separator (200) with a filter (100), the filter (100) comprising two or more rings (110). The rings are preferably axially stacked and coupled to each other. The rings (110) are, moreover, characterized in that the thickness of the rings (110) is not equal around the circumference of the rings (110), defining a minimum thickness (111) and a maximum thickness (112), wherein the difference in thickness (113) is defined as the difference between the maximum thickness (112) and the minimum thickness (111), and creating one or more openings (120) between the two or more rings (110).

When such a filter (100) is saturated with solid particles, it can be easily disassembled, cleaned, and subsequently re-assembled. Cleaning can be done by rinsing the rings (110). A broken or worn ring (110) can also be easily replaced.

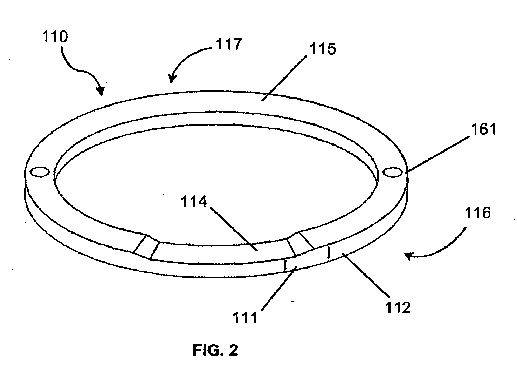

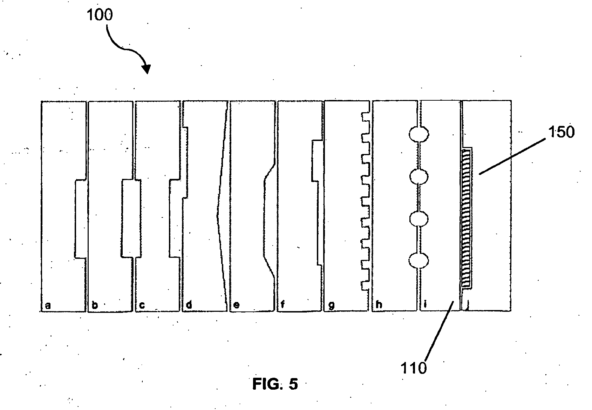

By the term "filter", is also understood to mean sieve. By the term "rings" are also understood washers and lamellae. The rings (110) are preferably disc-shaped. By the term "disc-shaped rings" are herein also referred to "ring-shaped disks." In one embodiment, the rings (110) has a round, oval or rectangular shape, preferably the ring (110) round. The shape of the rings (110) is not limiting. An example of a ring (110) suitable for the filter (100) according to the first aspect is shown in FIG. 2. Several examples of rings (110) suitable for the filter (100) according to the first aspect are shown in FIG. 5.

The term "circumference" of the ring (110) is not referring to the geometric perimeter, but to the profile of the ring (100).

In one embodiment, the rings (110) are made from wear-resistant material. In one embodiment, the rings (110) are made of metallic materials, preferably stainless steel.

Preferably, the washers (110) are cut by a laser. The surface of at least one side of the two or more rings (110) may be partially cut away, such that the thickness of the ring (110) is not equal along the circumference of the ring (110). The surface of at least one side of the two or more rings (110) may be partially removed by etching, whereby the thickness of the ring (110) is not equal along the circumference of the ring (110). The difference in thickness (113) can also be obtained by means of a laser.

In a preferred embodiment, at least one of the two or more rings (110) has a maximum thickness (112) of at least 0.60 mm. In one embodiment, at least one of the two or more rings (110) has a maximum thickness (112) of not more than 50.0 mm, for example, of up to 10.00 mm. In an alternative embodiment, at least one of the two or more rings (110) has a maximum thickness (112) of at least 10.00 mm, for example, of at least 50.0 mm. Rings (110) having a large inner diameter will typically be thicker for the sake of solidity. Preferably, at least one of the two or more rings (110) has a maximum thickness (112) of at least 1.00 mm and/or at most 5.00 mm. Preferably, all of the rings (110) have a maximum thickness (112) of at least 0.60 mm and/or more than 10.00 mm, preferably of at least 1.00 mm and/or at most 5.00 mm.

In a preferred embodiment, the invention includes a filter (100), in which at least one of the two or more rings (110) has a flat side (116) and a non-flat side (117). Preferably, all of the rings (110) have a flat side (116) and a non-flat side (117). FIG. 2 illustrates a ring with a flat side (116), i.e. the bottom side, and a non-flat side (117), i.e. the upper side.

In one embodiment, the surface of only one side of the two or more rings (110) is partially etched away, resulting in a non-flat etched edge (117) and a flat un-etched side (116). In one embodiment, the surface of both sides of the two or more rings (110) is partially etched away, resulting in two non-flat sides (117). In one embodiment, at least one side of the two or more rings (110) is etched away at an angle in order to prevent clogging.

In one embodiment, the surface of only one side of the two or more rings (110) is partially etched away, resulting in a non-flat etched side (117) and a flat non-etched side (116). In one embodiment, the surface of both sides of the two or more rings (110) is partially etched away, resulting in two non-flat sides (117).

The opening (120) between two rings (110) determines the particle size of the filter (100). The difference in thickness (113), therefore, can serve as a measure of the particle size which is filtered.

In one embodiment, two rings (110) having a flat side (116) against a non- flat side (117) are coupled to each other, such that the particle size of the filter (100) corresponds to the difference in thickness (113). FIG. 5 illustrates a filter (100) according to one embodiment of the first aspect of the invention, in which combinations a-b, d-e, e-f, f-g and, g-h represent possible couplings of a flat side (116) to a non-flat side (117).

In one embodiment, two rings (110) having a non-flat side (117) against a non-flat side (117) coupled to each other, such that the particle size of the filter (110) can be greater than the difference in thickness (113) and can maximally be the sum of both differences in thickness (113). FIG. 5 illustrates a filter (100) according to one embodiment of the first aspect of the invention, wherein combinations b-c, c-d, h-i and i-j represent possible couplings of a non-flat side (117) against another non-flat side (117).

In a preferred embodiment, the invention includes a filter (100) in which at least one of the two or more rings (110) is characterized in that the difference in thickness (113), defined as the difference between the minimum thickness (111) and the maximum thickness (112), is at least 0.005 mm and not more than 0.50 mm, preferably of at least 0.01 to no more than 0.20mm, for example, of at least 0.02 and no more than 0.10mm, for example, of at least 0.04, no more than 0.06 mm, for example, from about 0.05mm. Preferably, the difference in thickness (113) of all of the rings (110) is at least 0.005 mm and not more than 0.50 mm, preferably of at least 0.01 to no more than 0.20mm, for example, of at least 0.02 and no more than 0.10mm, for example, of at least 0.04, no more than 0.06 mm, for example, of about 0.05 mm.

In a preferred embodiment, the invention includes a filter (100) wherein at least two of the two or more rings (110) have a different thickness difference (113). In such an embodiment, the rings may be coupled to each other in such a way that different zones of the filter (100) have different particle sizes.

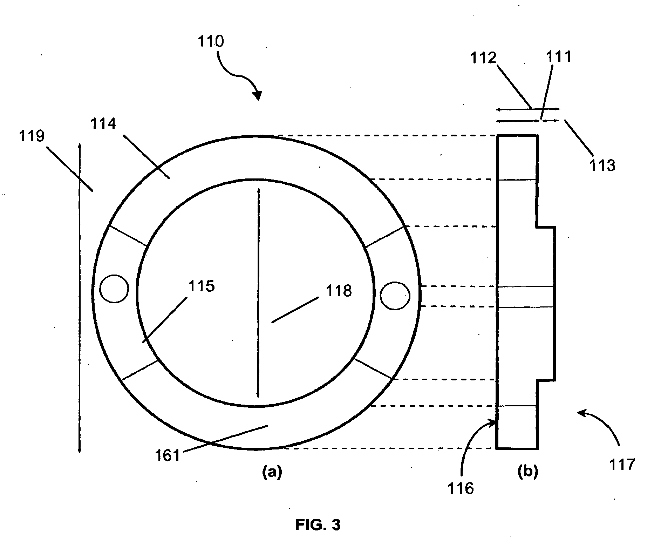

In a preferred embodiment, the invention includes a filter (100), in which at least one of the two or more rings (110) is characterized by a ring segment (114) with the minimum thickness (111) and a ring segment (115) with the maximum thickness (112). The term "ring segment with the minimum thickness" refers to the portion of the ring which is the minimum thickness. The term "ring segment to the maximum thickness" refers to the portion of the ring which has the maximum thickness. In FIG.2 and FIG.3, the ring segments (114) with the minimum thickness (111) and the ring segments (115) with the maximum thickness (112) are illustrated for embodiments of the ring (110) suitable for the filter (100) according to the first aspect of the invention.

In a preferred embodiment, the invention includes a filter (100), in which the sum of the surface area of the ring segment (114) with the minimum thickness (111) and the surface area of the ring segment (115) with the maximum thickness (112) comprises more than 90% of the total surface area of the ring (110), preferably more than 95%, preferably more than 98%, for instance more than 99%. In FIG. 3, this sum is 100%, since all segments have the minimum thickness (111) or the maximum thickness (112). In FIG. 2, this sum is less than 100%, since the ring also comprises two segments with a variable thickness between the segments with the minimum thickness (111) or the maximum thickness (112). These two segments shown in FIG. 2 are denoted by a dotted line. In FIG. 5, this value is 100 % for the left side of ring d and 0 % for the right ring (d). Rings e, f, h, and i are further examples of rings (110), where this sum is not equal to 100%.

In such an embodiment, the ring (110) comprises different planes with different heights along at least one side. Ring f in FIG. 5 is an example of such a ring (110).

In a preferred embodiment, the invention includes a filter (100), wherein the surface of the ring segment (114) with the minimum thickness (111) is at least 20% of the total surface area includes the ring (110), preferably at least 40%, preferably at least 60%. The larger the surface area of the ring segment (114) with the minimum thickness (111), the higher the flow rate.

In a preferred embodiment, the invention includes a filter (100) in which at least one of the two or more rings (110) has an inner diameter (118) of at least 10 cm. In one embodiment, the invention includes a filter (100) in which at least one of the two or more rings (110) has an inner diameter (118) of at most 100 cm. In an alternative embodiment, the invention includes a filter (100) in which at least one of the two or more rings (110) has an inner diameter (118) of at least 100 cm. In a preferred embodiment, the invention includes a filter (100) in which at least one of the two or more rings (110) has an inner diameter (118) of at least 20 cm and/or at most 50 cm. Preferably, all of the rings (110) has an inner diameter (118) of at least 10 cm and/or at most 100 cm, preferably of at least 20 cm and/or at most 50 cm.

In a preferred embodiment, the invention includes a filter (100) in which at least one of the two or more rings (110) has an outer diameter (119) of at least 20 cm and at most 150 cm, preferably from at least 30 cm, and 75 cm. Preferably, all of the rings (110) have an outer diameter (119) of at least 20 cm and at most 150 cm, preferably of at least 30 cm and at most 75 cm.

In a preferred embodiment, the invention includes a filter (100) wherein at least two of the two or more rings attached to each other (110) have a different inner diameter (118). In such an embodiment, there may be washers (110) having a smaller inner diameter in front of, or after, rings having a larger diameter. This way zones with different pressure are created in the filter (100).

In a preferred embodiment, the invention includes a filter (100) wherein the filter (100) is adjustable. By this is meant that the filter (100) comprises rings (110) which vary in thickness difference (113), and/or which vary in minimum thickness (111), and/or which vary in terms of maximum thickness (112), and/or which vary in ring segments (114,115), and/or which vary in inner diameter (118). In this way, rings (110) can be changed from position, or can be omitted, in which the filter (100) can be readily adapted to the type of manure to be separated and the desired filter characteristics.

Even when all of the foregoing parameters are equal, for example, when all of the rings (110) are identical, the filter (100) can be modulated, by coupling the rings (110) with the flat sides (116) or non-flat sides (117) to each other. In addition, the relative rotation of the rings (110) will lead to a variation in particle size.

In one embodiment, one or more openings (120) along one side of the filter (100) can be different from the one or more openings (120) along the other side of the filter (100). This can be generated by using rings (110) having a different thickness difference (113), or by coupling the rings (110) to each other in a specific sequence or given relative rotation. Such an embodiment allows obtaining different filtration properties depending on the area of the filter (100) in which sieving takes place.

In one embodiment of the invention, the filter (100) comprises seals (140) between the rings (110). In one embodiment, the filter comprises (100) rubber seals between the rings (110). In one embodiment, the filter (100) comprises seals between the two flat sides (116) of two rings (110), for example, rubber seals.

In a preferred embodiment, the seals (140) are water-permeable. In such embodiments, the filter (110) preferably comprises seals (140) between two non-planar sides (117) of two rings (110), or between a flat side (116) and a non-flat side (117) of two rings (110). Preferably, the one or more openings (120) are completely filled with such water-permeable seals (140). In a preferred embodiment, the invention includes a filter (100) wherein the one or more openings (120) comprises a water-permeable medium (150). This allows obtaining a manure residue with a better filtration of solid particles. Because the phosphates are usually attached to the solid particles, a higher separation efficiency for phosphates can be achieved.

In a preferred embodiment, the invention includes a filter (100) in which at least one of the two or more rings (110) has a groove (155), wherein the groove comprises a water-permeable medium (150). Preferably, the water-permeable medium (150), for example a cord, is placed in the grooves (155). FIG. 3 illustrates a cross-section of a ring (110) having a groove (155) suitable to accommodate a cord (150). FIG. 5 illustrates a side view of a cord (155) placed in the opening (120) between the rings i and j.

In a preferred embodiment, the water-permeable medium (150) comprises a cord. In a preferred embodiment of the invention, the filter (100) comprises cords between the rings (110). By the term "cords" will be understood to mean also ropes. In preferred embodiment, the cord material is selected from the list comprising: flax, hemp, cotton, manila, sisal, or coconut rope. In a preferred embodiment, the cord has a thickness of at least 0.02mm. In one embodiment, the cord has a thickness of not more than 0.20mm. In one embodiment, the cord has a thickness of at least 0.05 mm and/or at most 0.10 mm. In one embodiment, the cord has a thickness of at least 10.0 mm and/or at most 30.00 mm, preferably at most 20.00 mm.

These cords make it possible to allow water to pass, but to retain solid particles. Such cords are also easy to clean, or may be discarded after use.

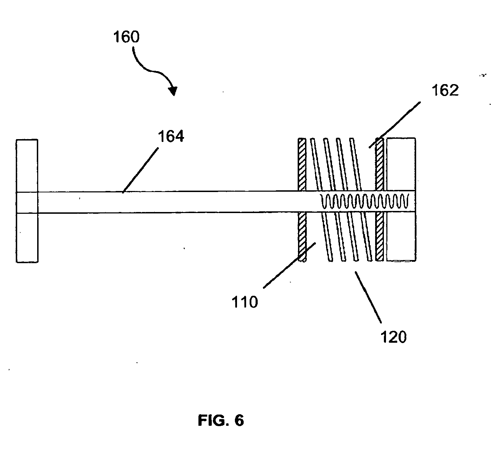

The rings (110) can be pressed against each other in any possible way, not necessarily on a number of axes, but for example, in a cage. The cage can be constructed such that the rings (110) can be rotated axially relative to each other in order to avoid clogging. In a preferred embodiment, the rings (110) can rotate axially relative to each other. In one embodiment, the rings (110) are pressed against one another by means of hydraulic counter-pressure. The two or more rings (110) are coupled to each other, preferably by means of a coupling means (160). The coupling means (160) may be mechanical. The coupling means (160) may be hydraulic. In a preferred embodiment, the coupling means (160) is selected from the list comprising: screws, bolts, and/or springs. A coupling means (160) including screws and bolts, optionally with springs, results in easier assembly. In a preferred embodiment, the coupling means comprises both springs (162) and bolts (164). In a preferred embodiment, the invention includes a filter (100) in which the two or more rings (110) are coupled to each other via springs (162). In a preferred embodiment, the coupling means includes the following configuration: bott - ring - spring - ring - nut. The springs (162) make sure that the filter (100) can be easily disassembled. In a preferred preferred embodiment, the two or more rings (110) comprise two or more suture holes (161), suitable for the assembly of the two or more rings (110) via a coupling means (160), preferably via bolts (164), and/or springs (162). FIG.6 illustrates a cross-section of an embodiment of a coupling means (160).

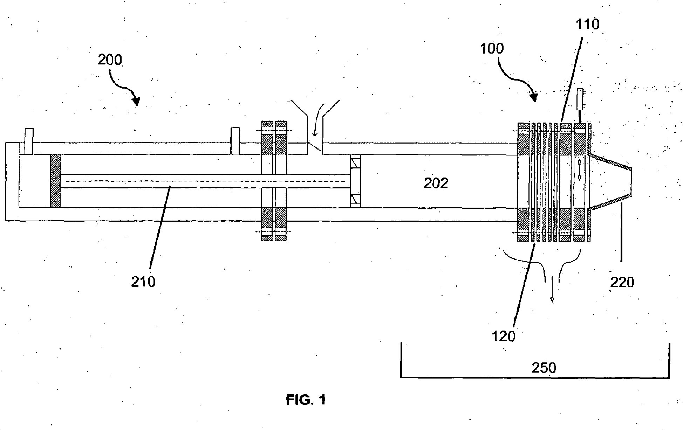

Preferably, the manure separator (200) comprises a compression chamber (202), comprising the filter (100). FIG. 1 illustrates an embodiment of a manure separator (200), comprising the filter (100) according to the first aspect of the invention. In a preferred embodiment, the manure separator (200) comprises a casing (250) surrounding the compressing chamber (202) or around the filter (100). This casing (250) can accommodate the pressing juice. Such a closed system allows the emissions, such as NH₃ emissions, to remain low and reduce malodors. In this way, the manure separator (200) more easily complies with environmental measures. In one embodiment, the manure separator (200) comprises a fender and a collecting funnel.

In a preferred embodiment, the invention encompasses a manure separator (200) comprising a hydraulic cylinder (210) to compress the manure in the filter (100) or in the compressing chamber (202). In one embodiment, the raw manure is brought into the manure chamber by means of a single-acting hydraulic cylinder with non-return (one-way) valves. In one embodiment, the raw manure is brought into the manure chamber by means of a double acting hydraulic cylinder on both sides with a compression chamber (202), or by two single-acting cylinders next to each other, each of which in turn pushes the manure into the chamber (202). Such a system is similar to a concrete pump.

The raw manure can also be brought into the filter (100) or in the compression chamber (202) by means of a jack (215). In a preferred embodiment, the invention comprises a manure separator (200) comprising a jack (215). Preferably, the jack (215) is a screw press. Preferably, the jack or screw (215) has a stainless steel jack. Preferably, the jack is driven hydraulically. In one embodiment, the jack is driven by an electric motor with reduction gearbox. The manure separator (200) makes it possible to use a smaller jack and/or to apply less force on the jack. The diameter of the jack (215) can maximally be the inner diameter of the rings (110). The diameter of the jack or screw (215) determines the rate at which the raw manure can be charged into the filter (100) or the bale chamber (202). The diameter of the jack (215) determines the power that will be needed to drive the jack (215).

In a preferred embodiment, the invention comprises a manure separator (200) comprising a funnel (220) at the end of the filter (100). In a preferred embodiment, the invention comprises a manure separator (200), wherein the funnel (220) is a conical funnel. In an embodiment, different types of diameters and gradients are used. The funnel (220) allows building additional pressure towards the end of the filter (100). In one embodiment, the funnel (220) is controllable, for example by means of a spring or a hydraulic counter-pressure. In this way, the pressure in the filter (100) can be controlled accurately. In one embodiment, the conical funnel is adjustable.

In a preferred embodiment, the invention comprises a manure separator (200) comprising a sealing element on the end of the filter (100) or on the end of the funnel (220). In one embodiment, the sealing element is located between the end of the filter (100) and the funnel (220).

In a preferred embodiment, the sealing element is a conical sealing element. In a preferred embodiment, the sealing element is movably coupled to the filter (100) or the funnel (220), for example by means of a spring (mechanical pressure), or a hydraulic counter-pressure. In this way, the pressure in the filter (100) can be controlled accurately.

In a preferred embodiment, the invention comprises a manure separator (200) wherein the closing element delivers an adjustable pressure on the manure.

The opening will also determine the pressure in the filter (100) or in the compression chamber (202), the smaller the opening, the higher the pressure in the compression chamber (202). Higher pressure in the chamber (202) our filter (100) will also ensure that more pressing juice can be squeezed through the filter (100).

In a preferred embodiment, the manure separator (200) comprises an aalton (270), which can serve as a buffer. Onto said aalton (270) a press can be placed. Preferably, the raw manure is gravitationally transferred to the press.

In a preferred embodiment, the manure separator (200) comprises a pump (280), preferably a submersible pump, preferably a submersible pump with a cutting system, for example a positive displacement pump, or any other kind of pump. the pump (280) can bring the manure to the aalton (270).

In one embodiment, the pressed solid fraction is discharged, for example to a container. Preferably, this is done by means of a jack or screw or a conveyor belt. The liquid fraction or press juice may be gravitationally led to a pit or manure bag.

In a preferred embodiment, the invention comprises a manure separator (200) in which there are two or more manure separators (200) coupled one after the other. In a preferred embodiment, the first manure separator (200) does not include water-permeable cable (150), and a subsequent manure separator (200) includes a water-permeable cable (150).

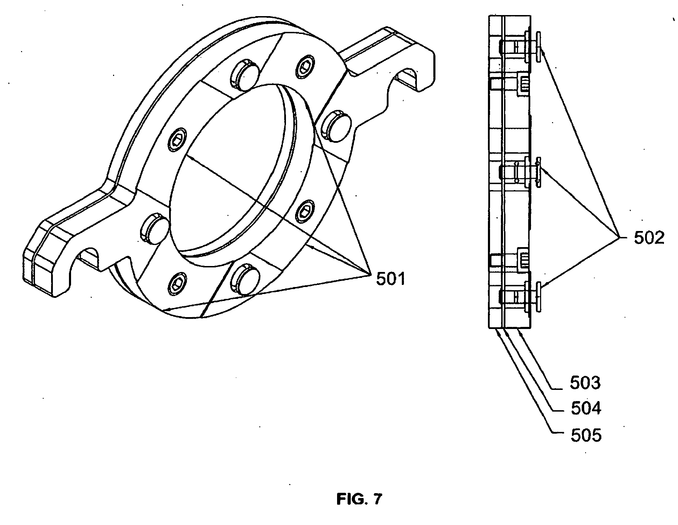

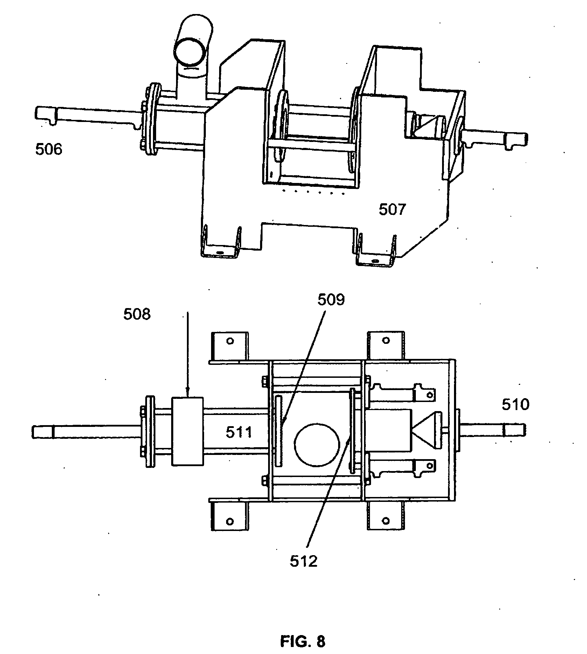

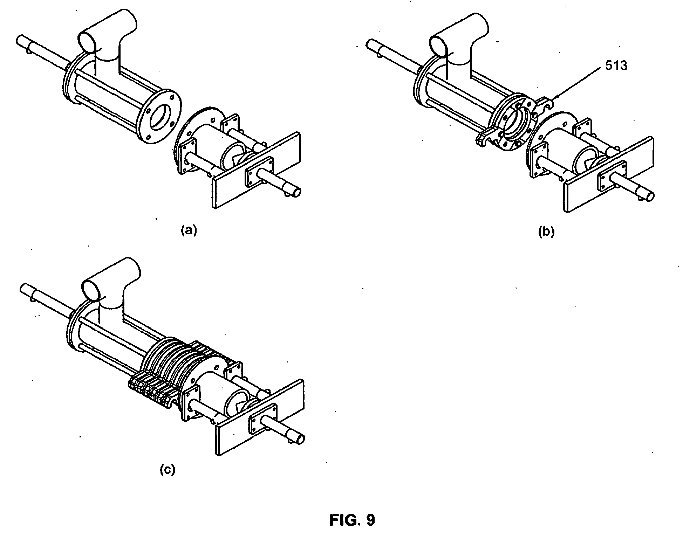

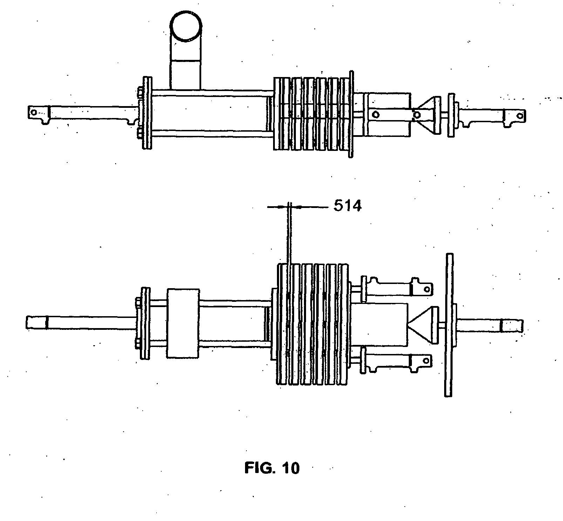

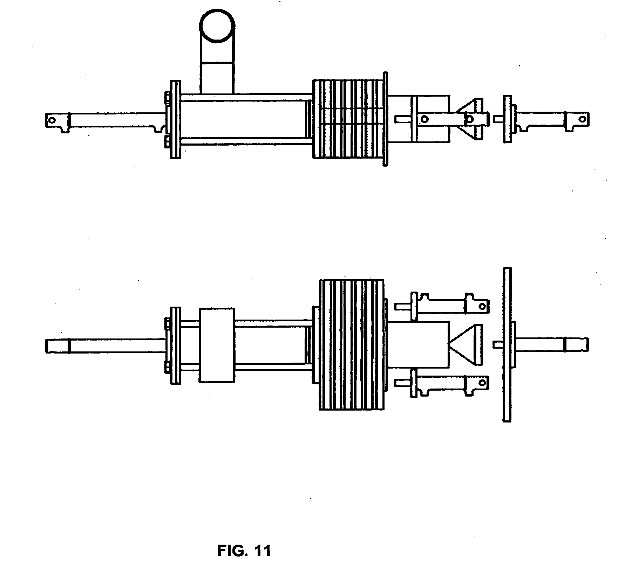

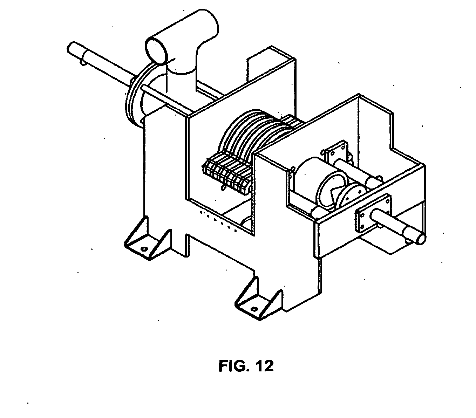

In an embodiment, the smooth operation of the manure separator is assured by keeping the recesses in the rings (110) "open" through which the thin fraction is disposed of. In a preferred embodiment, the manure separator (200) comprises an automatic cleaning system, which can be used to build a labor-friendly system. In one embodiment, the above is made possible by the additional features in the rings, such as illustrated in Figures 7-12.

In a preferred embodiment, the rings (110) are mounted between the fixed (509) and the movable clamp plate (512). Plungers (502) in the rings can ensure that an opening is created, for example from about 2 to 20 mm, between the rings (110), preferably from 5 to 12 mm, more preferably of about 8 mm.

In one embodiment, the movable clamping plate is hydraulically clamped, whereby the rings (110) are pressed against each other. In this setting it is possible to separate manure. After some time the system can be cleaned. For this, the movable clamping plate would be brought back into resting position. The rings are then separate from each other, for example with 8mm spacing. Via a flushing pipe under high pressure, which is in one embodiment mounted above the rings, the rings can be sprayed. Afterwards everything can be closed again and the press can continue working. In one embodiment, the flushing pipe has a fixed pipe with fixed nozzles or one or more movable nozzle(s) that move along the rings (110). Both water and air can be used for cleaning. Alternatively, the liquid fraction obtained during the separation of the manure can also be recycled in order to clean the filter.

The invention also comprises a method for separating manure comprising the step
- Separating the manure fractions with a manure separator (200).

An advantage of the method is that also limited flow rates are cost-effective. In a preferred embodiment, the invention comprises a method according to the third aspect of the invention, with a flow rate of at least 1.0m³/ h. In one embodiment, the flow rate is no more than 20.0 m³ /. h. In one embodiment, at least the flow rate 20.0 m³ / h. The flow rate is, for example 1.0 m³ / h or more , 2.0 m³ / h or more , 3.0 m³ /h or more , 5.0 m³ /h or more , 10.0 m³ /h or more , 15.0 m³ / h or more , 20.0 m³ / h or more , 50.0 m³ / h or more , 100 m³ / h or more , 200 m³ / h or more , or 500 m³ / h or more.

In a preferred embodiment, the invention comprises a method in which the manure comprises cattle and pig manure. Cattle manure can include manure from cows. Pig manure can include manure of sows.

In a preferred embodiment, the invention comprises a method, whereby the manure is separated into a solid and a liquid fraction. Alternatively, one can speak of a thick fraction and a thin fraction (or pressing juice). With solid fraction is meant herein the fraction that is stackable, i.e. the fraction that can be placed on a lot, such as compost or peat or other substances. A solid fraction contains as little moisture as possible, for example, 10 percent by weight, preferably with maximum moisture content of 70 percent by weight moisture based on the total weight of the solid fraction. A solid fraction can contain 90% dry matter, preferably at least 30 % of dry matter. When more moisture is present in the solid fraction, it will no longer be able to be stacked. A thin or liquid fraction can be applied to the land, and the thick or solid fraction can be composted. Typically, the organic matter and phosphates mainly accumulate in the thick or solid fraction.

The method allows obtaining high dry matter content in the solid fraction. In a preferred embodiment, the dry matter content in the solid fraction is at least 20%, preferably at least 25 %, more preferably at least 30 %, more preferably at least 35%, preferably at least 40 %, for example at least 45%, for example at least 50%, for example at least 55%, for example at least 60%, for example at least 65%, for example at least 70%, for example at least 75%, for example at least 80%, for example at least 85%, for example about 90%.

The dry matter content can be measured by the BAM Directive part 3/03 and Part 4/03, version 3.1 in June 2010, of the Compendium of sampling and analysis for manure, soil and feed of the Flemish Land Agency. Preferably, the dry matter content is measured by means of standard NEN 7432:1998.

The method allows obtaining high separation efficiency. In a preferred embodiment, the separation efficiency for N at least 10%, preferably at least 20%, more preferably at least 30%, for example at least 40%, for example at least 50%, for example at least 60%, for example at least 70%. In a preferred embodiment, the separation efficiency for P₂O₅ is at least 40%, preferably at least 50 %, preferably at least 60%, preferably at least 70%, preferably at least 80%, more preferably at least 90%. In one embodiment, the separation efficiency for P₂O₅ is between 40% and 70%. In a preferred embodiment, the separation efficiency for K₂O is at least 10%, preferably at least 20%, more preferably at least 30 %.

The total phosphorus content can be measured by Directive BAM part 3/04 and Part 4/04, version 3.1 in June 2010, of the Compendium of sampling and analysis for manure, soil and feed the Flemish Land Agency.

The total nitrogen content can be measured by Directive BAM part 3/06 and Part 4/06, version 3.1 in June 2010, of the Compendium of sampling and analysis for manure, soil and feed the Flemish Land Agency. Preferably, the total nitrogen content measured by NEN 7437:1998.

The total potassium content can be measured by standard NEN 7436:1998.

## Claims

1. A manure separator (200) comprising a filter (100), **characterized in that** the filter comprises the following parts: two or more axially stacked and interconnected rings (110), wherein the thickness of the rings (110) is not equal around the circumference of the rings (110), generating a minimum thickness (111) and a maximum thickness (112), with the thickness difference (113) being defined as the difference between the maximum thickness (112) and the minimum thickness (111), creating one or more openings (120 between the two or more rings (110).

2. The manure separator (200) according to claim 1, wherein at least one of the two or more rings (110) of the filter (100) has a maximum thickness (112) of at least 0.60 mm.

3. The manure separator (200) according to claim 1 or 2, wherein at least one of the two or more rings (110) of the filter (100) has a flat side (116) and a non-flat side (117).

4. The manure separator (200) according to any one of the preceding claims, wherein at least one of the two or more rings (110) of the filter (100) is **characterized in that** the thickness difference (113) is at least 0.005 mm and not more than 0.50 mm.

5. The manure separator (200) according to any one of the preceding claims, wherein at least two of the two or more rings (110) of the filter (100) have a different thickness difference (113).

6. The manure separator (200) according to any one of the preceding claims, wherein at least one of the two or more rings (110) of the filter (100) is **characterized by** a ring segment (114) having the minimum thickness (111) and a ring segment (115) having the maximum thickness (112).

7. The manure separator (200) according to claim 6, wherein the sum of the surface area of the ring segment (114) with the minimum thickness (111) and the surface area of the ring segment (115) with the maximum thickness (112) comprises more than 90% of the total surface area of the ring (110), preferably more than 95%, preferably more then 98%, for instance more than 99%.

8. The manure separator (200) according to claim 6 or 7, wherein the surface of the ring segment (114) with the minimum thickness (111) is at least 20% of the total surface area of the ring (110).

9. The manure separator (200) according to any one of the preceding claims, wherein at least one of the two or more rings (110) has an inner diameter (118) of at least 10 cm, and/or wherein at least one of the two or more rings (110) has an outer diameter (119) of at least 20 cm, and at most 150 cm.

10. The manure separator (200) according to any one of the preceding claims, wherein at least two of the two or more rings attached to each other (110) have a different inner diameter (118).

11. The manure separator (200) according to any one of the preceding claims, wherein the one or more openings (120) comprise a water- permeable medium (150).

12. The manure separator (200) according to any one of the preceding claims, wherein at least one of the two or more rings (110) has a groove (155), wherein the groove comprises water- permeable medium (150).

13. The manure separator (200) according to claim 11 or 12, wherein the water-permeable medium (150) comprises a cord, which is preferably comprised out of material selected from the list comprising: flax, hemp, cotton, manila, sisal, or coconut rope, and/or wherein the cord has a thickness of at least 0.02mm.

14. The manure separator (200) according to any one of the preceding claims, wherein the two or more rings (110) are coupled to each other by means of an coupling device (160), preferably wherein the coupling device (160) is selected from the list comprising: screws, bolts (164) and/or springs (162), and/or wherein the two or more rings (110) are clamped between a fixed and a movable clamping plate, wherein the two clamping plates are preferably hydraulically clamped against each other.

15. The manure separator according to any one of the preceding claims, wherein plungers (502) in the ring ensure that in non-clamped state an opening is created between the rings (110) for example, from about 2-20 mm, preferably of 5-12 mm, more preferably from about 8 mm.

16. A method for separating manure comprising the step of separating the manure fractions with a manure separator (200) according to any one of claims 1 to 15

## Patentansprüche

1. Gülleseparator (200), aufweisend ein Filter (100), **dadurch gekennzeichnet, dass** das Filter die folgenden Teile aufweist: zwei oder mehr axial gestapelte und miteinander verbundene Ringe (110), wobei die Dicke der Ringe (110) um den Umfang der Ringe (110) nicht gleich ist, wodurch eine minimale Dicke (111) und eine maximale Dicke (112) erzeugt werden, wobei die Dickendifferenz (113) als die Differenz zwischen der maximalen Dicke (112) und der minimalen Dicke (111) definiert ist, wobei eine oder mehrere Öffnungen (120) zwischen den zwei oder mehr Ringen (110) gebildet sind.

2. Gülleseparator (200) nach Anspruch 1, wobei mindestens einer der zwei oder mehr Ringe (110) des Filters (100) eine maximale Dicke (112) von mindestens 0,60 mm hat.

3. Gülleseparator (200) nach Anspruch 1 oder 2, wobei mindestens einer der zwei oder mehr Ringe (110) des Filters (100) eine flache Seite (116) und eine nicht flache Seite (117) hat.

4. Gülleseparator (200) nach einem der vorangehenden Ansprüche, wobei mindestens einer der zwei oder mehr Ringe (110) des Filters (100) **dadurch gekennzeichnet ist, dass** die Dickendifferenz (113) mindestens 0,005 mm und nicht mehr als 0,50 mm beträgt.

5. Gülleseparator (200) nach einem der vorangehenden Ansprüche, wobei mindestens zwei der zwei oder mehr Ringe (110) des Filters (100) eine unterschiedliche Dickendifferenz (113) haben.

6. Gülleseparator (200) nach einem der vorangehenden Ansprüche, wobei mindestens einer der zwei oder mehr Ringe (110) des Filters (100) durch ein Ringsegment (114) mit der minimalen Dicke (111) und ein Ringsegment (115) mit der maximalen Dicke (112) gekennzeichnet ist.

7. Gülleseparator (200) nach Anspruch 6, wobei die Summe des Oberflächenbereichs des Ringsegments (114) mit der minimalen Dicke (111) und des Oberflächenbereichs des Ringsegments (115) mit der maximalen Dicke (112) mehr als 90% des gesamten Oberflächenbereichs des Rings (110) beträgt, vorzugsweise mehr als 95%, vorzugsweise mehr als 98%, zum Beispiel mehr als 99%.

8. Gülleseparator (200) nach Anspruch 6 oder 7, wobei die Oberfläche des Ringsegments (114) mit der minimalen Dicke (111) mindestens 20% des gesamten Oberflächenbereichs des Rings (110) beträgt.

9. Gülleseparator (200) nach einem der vorangehenden Ansprüche, wobei mindestens einer der zwei oder mehr Ringe (110) einen Innendurchmesser (118) von mindestens 10 cm hat und/oder wobei mindestens einer der zwei oder mehr Ringe (110) einen Außendurchmesser (119) von mindestens 20 cm und höchstens 150 cm hat.

10. Gülleseparator (200) nach einem der vorangehenden Ansprüche, wobei mindestens zwei der zwei oder mehr Ringe (110), die aneinander befestigt sind, einen unterschiedlichen Innendurchmesser (118) haben.

11. Gülleseparator (200) nach einem der vorangehenden Ansprüche, wobei die eine oder mehreren Öffnungen (120) ein wasserdurchlässiges Medium (150) aufweisen.

12. Gülleseparator (200) nach einem der vorangehenden Ansprüche, wobei mindestens einer der zwei oder mehr Ringe (110) eine Rille (155) hat, wobei die Rille ein wasserdurchlässiges Medium (150) aufweist.

13. Gülleseparator (200) nach Anspruch 11 oder 12, wobei das wasserdurchlässige Medium (150) eine Schnur aufweist, die vorzugsweise aus einem Material besteht, das aus der folgenden Liste ausgewählt ist: Flachs, Hanf, Baumwolle, Manilafaser, Sisal oder Kokosnussseil, und/oder wobei die Schnur eine Dicke von mindestens 0,02 mm hat.

14. Gülleseparator (200) nach einem der vorangehenden Ansprüche, wobei die zwei oder mehr Ringe (110) durch eine Kopplungsvorrichtung (160) aneinandergekoppelt sind, wobei die Kopplungsvorrichtung (160) aus der folgenden Liste ausgewählt ist: Schrauben, Bolzen (164) und/oder Federn (162), und/oder wobei die zwei oder mehr Ringe (110) zwischen einer feststehenden und einer beweglichen Klemmplatte festgeklemmt sind, wobei die zwei Klemmplatten vorzugsweise hydraulisch aneinandergeklemmt sind.

15. Gülleseparator nach einem der vorangehenden Ansprüche, wobei Kolben (502) in dem Ring sicherstellen, dass im nicht festgeklemmten Zustand eine Öffnung zwischen den Ringen (110) von zum Beispiel etwa 2-20 mm, vorzugsweise 5-12 mm, bevorzugter von etwa 8 mm gebildet ist.

16. Verfahren zum Trennen von Gülle, aufweisend den Schritt zum Trennen der Güllefraktionen mit einem Gülleseparator (200) nach einem der Ansprüche 1 bis 15.

## Revendications

1. Séparateur de fumier (200) comprenant un filtre (100), **caractérisé en ce que** le filtre comprend les parties suivantes : au moins deux anneaux (110) empilés axialement et raccordés l'un à l'autre, l'épaisseur des anneaux (110) n'étant pas égale autour de la circonférence des anneaux (110), ceci générant une épaisseur minimum (111) et une épaisseur maximum (112), la différence d'épaisseur (113) étant définie comme la différence entre l'épaisseur maximum (112) et l'épaisseur minimum (111), ceci créant une ou plusieurs ouvertures (120) entre les au moins deux anneaux (110).

2. Séparateur de fumier (200) selon la revendication 1, dans lequel au moins un anneau parmi les au moins deux anneaux (110) du filtre (100) présente une épaisseur maximum (112) d'au moins 0,60 mm.

3. Séparateur de fumier (200) selon la revendication 1 ou 2, dans lequel au moins un anneau parmi les au moins deux anneaux (110) du filtre (100) comporte un côté plat (116) et un côté non plat (117).

4. Séparateur de fumier (200) selon l'une quelconque des revendications précédentes, dans lequel au moins un anneau parmi les au moins deux anneaux (110) du filtre (100) est **caractérisé en ce que** la différence d'épaisseur (113) est d'au moins 0,005 mm et d'au plus 0,50 mm.

5. Séparateur de fumier (200) selon l'une quelconque des revendications précédentes, dans lequel au moins deux anneaux parmi les au moins deux anneaux (110) du filtre (100) présentent une différence d'épaisseur (113) différente.

6. Séparateur de fumier (200) selon l'une quelconque des revendications précédentes, dans lequel au moins un anneau parmi les au moins deux anneaux (110) du filtre (100) est **caractérisé par** un segment d'anneau (114) présentant l'épaisseur minimum (111) et un segment d'anneau (115) présentant l'épaisseur maximum (112).

7. Séparateur de fumier (200) selon la revendication 6, dans lequel la somme de l'aire du segment d'anneau (114) présentant l'épaisseur minimum (111) et de l'aire du segment d'anneau (115) présentant l'épaisseur maximum (112) constitue plus de 90 % de l'aire totale de l'anneau (110), de préférence plus de 95 %, de préférence plus de 98 %, par exemple plus de 99 %.

8. Séparateur de fumier (200) selon la revendication 6 ou 7, dans lequel la surface du segment d'anneau (114) présentant l'épaisseur minimum (111) constitue au moins 20 % de l'aire totale de l'anneau (110).

9. Séparateur de fumier (200) selon l'une quelconque des revendications précédentes, dans lequel au moins un anneau parmi les au moins deux anneaux (110) présente un diamètre intérieur (118) d'au moins 10 cm, et/ou dans lequel au moins un anneau parmi les au moins deux anneaux (110) présente un diamètre extérieur (119) d'au moins 20 cm, et d'au plus 150 cm.

10. Séparateur de fumier (200) selon l'une quelconque des revendications précédentes, dans lequel au moins deux anneaux parmi les au moins deux anneaux (110) fixés l'un à l'autre présentent un diamètre intérieur (118) différent.

11. Séparateur de fumier (200) selon l'une quelconque des revendications précédentes, dans lequel la ou les ouvertures (120) comprennent un milieu perméable à l'eau (150).

12. Séparateur de fumier (200) selon l'une quelconque des revendications précédentes, dans lequel au moins un anneau parmi les au moins deux anneaux (110) comporte une rainure (155), dans lequel la rainure comprend un milieu perméable à l'eau (150).

13. Séparateur de fumier (200) selon la revendication 11 ou 12, dans lequel le milieu perméable à l'eau (150) comprend un cordon, qui est de préférence constitué d'un matériau sélectionné dans la liste comprenant : le lin, le chanvre, le coton, le papier kraft, le sisal ou la corde en fibres de noix de coco, et/ou dans lequel le cordon présente une épaisseur d'au moins 0,02 mm.

14. Séparateur de fumier (200) selon l'une quelconque des revendications précédentes, dans lequel les au moins deux anneaux (110) sont accouplés l'un à l'autre au moyen d'un dispositif d'accouplement (160), de préférence dans lequel le dispositif d'accouplement (160) est sélectionné dans la liste comprenant: des vis, des boulons (164) et/ou des ressorts (162), et/ou dans lequel les au moins deux anneaux (110) sont serrés entre une mâchoire fixe et une mâchoire mobile, dans lequel les deux mâchoires sont de préférence serrées l'une contre l'autre de manière hydraulique.

15. Séparateur de fumier selon l'une quelconque des revendications précédentes, dans lequel des pistons (502) dans l'anneau garantissent que, dans un état non serré, une ouverture soit créée entre les anneaux (110), par exemple d'environ 2 à 20 mm, de préférence de 5 à 12 mm, plus préférablement d'environ 8 mm.

16. Procédé de séparation de fumier comprenant l'étape consistant à séparer les fractions de fumier à l'aide d'un séparateur de fumier (200) selon l'une quelconque des revendications 1 à 15.
